# EUROPEAN PATENT APPLICATION

(11) **EP 2 876 148 A1**
(43) Date of publication of application: **27.05.2015**
(21) Application number: 13819195.2
(22) Date of filing: 03.07.2013
(51) Int. Cl.: C10J 3/32, C10J 3/02

(54) **BRIDGE ELIMINATION CONTROL DEVICE FOR GASIFICATION FURNACE**

(30) Priority: 19.07.2012 JP 2012160651
(71) Applicant: Yanmar Co., Ltd., Osaka-shi, Osaka 530-8311 (JP)
(72) Inventor: WAKIZAKA, Hiroaki, Osaka-shi Osaka 530-8311 (JP); AKASAKA, Futoshi, Osaka-shi Osaka 530-8311 (JP); NARUMI, Yoshinari, Osaka-shi Osaka 530-8311 (JP); HARA, Akihiro, Osaka-shi Osaka 530-8311 (JP)
(74) Representative: Hinkelmann, Klaus
(86) International application number: PCT/JP2013/068247
(87) International publication number: WO 2014/013874

(57) **Abstract**

A gasification furnace has, on an upper portion of an outer cylinder, an inner cylinder for supplying a solid raw material. A bridge elimination control apparatus for the gasification furnace includes: a stirring member that is inserted into the inner cylinder and that has a longitudinal direction in a vertical direction of the gasification furnace; a vertical drive portion that raises and lowers the stirring member between a standby position where the stirring member is separated apart from the solid raw material that accumulates in the inner cylinder, and a predetermined position located in the solid raw material in the gasification furnace under the standby position; a rotational drive portion that rotates the stirring member about a shaft of the stirring member when an operation to eliminate a bridge is performed by lowering the stirring member; a detection unit that detects the bridge caused by the solid raw material in the gasification furnace; and a control apparatus that controls the vertical drive portion and the rotational drive portion based on a signal from the detection unit.

## Description

### Technical Field

The present invention relates to a bridge elimination apparatus for a gasification furnace that is applied, for example, to a biomass gasification system that gasifies biomass fuel.

### Background Art

Conventionally, as a biomass gasification system that gasifies biomass fuel (hereinafter referred to as "fuel"), a configuration including the following is known: a gasification furnace that gasifies the fuel, a supply conveyor that supplies a solid raw material (fuel) to the gasification furnace, an inner cylinder that introduces the fuel into the gasification furnace, a scrubber, a filter, an engine generator and the like (for example, see Patent Document 1).

Also, a biomass gasification system is known, which can stably supply the biomass fuel (for example, see Patent Document 2). The biomass gasification system described in Patent Document 2 has a configuration in which a hopper, which is used in the previous process of the process using the gasification furnace, has a stirring blade member so as to prevent a bridge from occurring in the hopper.

### Prior Art Documents

### Patent Documents

[Patent Document 1] JP 2010-215810 A
[Patent Document 2] JP 2006-082963 A

### Summary of Invention

### Problem to be Solved by Invention

In a gasification reaction in the gasification furnace, if the amount of air in the furnace is insufficient, a temperature decreases and tar is produced in high concentration. The gas containing a large amount of tar is condensed in respective apparatuses in the downstream of the gasification furnace, which results in malfunction by conglutination and the like. In the engine especially, a supercharger, an intake valve and the like are conglutinated with the tar, which causes the malfunction.

On the other hand, if the amount of air in the furnace increases excessively and the temperature increases excessively, melting of ash is caused. Thus, it is necessary to successfully control the ratio between the fuel raw material and the air as a gasification agent as well as the contact ratio therebetween.

Chips for the fuel include cut chips and crushed chips (so-called pin chips). It is desirable to use the crushed chips as the raw material for gasification, since the crushed chips are inexpensive due to their limited applications. On the other hand, the crushed chips, which entwine with each other, have a low fluidity and easily cause a bridge. Also, the crushed chips have a high voidage. Furthermore, because the crushed chips have a high angle of repose (i.e., because the ridge line of the crushed chips steepens), an air drift easily occurs.

For the reasons described above, the following problems occur:

### (1) Decrease of calorific value of gas

The drift in the furnace easily causes an excessive air state as a whole, in which the fuel has a tendency to burn. Accordingly, the contact ratio between the combustion gas and char is deteriorated. Also, the raw material is supplied intermittently due to a bridge of the fuel, thus the calorific value decreases.

### (2) Production of tar

The drift in the furnace causes the excessive air state as a whole, while a region where the air is insufficient is generated in the furnace. In such a region, the temperature decreases and tar is produced.

Also, in the gasification furnace, the inside of the fuel is gasified and a cavity is generated, thus a bridge state may occur. When the bridge state occurs, the fuel on the cavity falls down to burst into a collapse. In such a collapse of the bridge, a large amount of fuel (insufficiently heated raw materials) is supplied to a high temperature portion located in the lower portion of the gasification furnace. For this reason, the temperature balance is lost and the temperature in the gasification furnace drastically decreases, which results in the production of a large amount of tar.

In the biomass gasification system described in Patent Document 1, a hopper is provided with a stirring blade member. Thus, rotation of the stirring blade member in the hopper can prevent biomass particles from forming the bridge, however, if the bridge occurs in the gasification furnace, it is not possible to eliminate it.

An object of the present invention is to eliminate the bridge that occurs in the gasification furnace.

### Means for Solving Problem

The present invention was made to solve the above problem. In a bridge elimination control apparatus for a gasification furnace of the present invention, the gasification furnace has, on an upper portion of an outer cylinder, an inner cylinder for supplying a solid raw material. The bridge elimination control apparatus for the gasification furnace includes: a stirring member that is inserted into the inner cylinder and that has a longitudinal direction in a vertical direction of the gasification furnace; a vertical drive portion configured to raise and lower the stirring member between a standby position where the stirring member is separated apart from the solid raw material that accumulates in the inner cylinder, and a predetermined position located in the solid raw material in the gasification furnace under the standby position; a rotational drive portion that rotates the stirring member about a shaft of the stirring member when an operation to eliminate a bridge is performed by lowering the stirring member; a detection unit configured to detect the bridge caused by the solid raw material in the gasification furnace; and a control apparatus configured to control the vertical drive portion and the rotational drive portion based on a signal from the detection unit.

The above-described bridge elimination control apparatus for the gasification furnace of the present invention controls the vertical drive portion and the rotational drive portion based on the signal from the detection unit. Thus, it is possible to automatically eliminate the bridge by lowering and rotating the stirring member when the bridge in the gasification furnace is detected. Specifically, it is possible to prevent gas containing a large amount of tar from being supplied to the engine. As a result, it is possible to prevent the gas containing the large amount of tar from being condensed in a supercharger and an intake valve and the like of the engine, accordingly, malfunction by conglutination can be avoided. In the bridge elimination control apparatus for the gasification furnace, a second stirring member may be disposed on a bottom portion of the outer cylinder, and a throat portion of the outer cylinder may be disposed above the bottom portion and under the inner cylinder. The control apparatus may lower the stirring member to a position at which the stirring member passes through the throat portion when the control apparatus determines that at least one of the following conditions is established: a pressure in the throat portion does not increase in spite of an operation of the second stirring member; the pressure of the throat portion is less than or equal to a predetermined value; a pressure on a side under the throat portion and the pressure in the throat portion have a predetermined correlation; and a temperature in the throat portion is higher than or equal to a predetermined value.

With the above-described bridge elimination control apparatus for the gasification furnace of the present invention, it is possible to eliminate the bridge in the throat portion.

In the above-described bridge elimination control apparatus for the gasification furnace, the control apparatus may cause the stirring member to wait to move down until a predetermined time period elapses from a time when the stirring member has returned to the standby position.

With the above-described bridge elimination control apparatus for the gasification furnace of the present invention, it is possible to prevent hunting of the stirring member, i.e., involuntary up-and-down movement.

In the above-described bridge elimination control apparatus for the gasification furnace, a first predetermined position separated from a lower end of the inner cylinder may be set to be a first predetermined height, and a predetermined position higher than the first predetermined height may be set to be a second predetermined height. The control apparatus may lower the stirring member to a position at which a lower end of the stirring member reaches the lower end of the inner cylinder when the control apparatus determines that at least one of the following conditions is established: the solid raw material accumulates higher than or equal to the second predetermined height; the solid raw material accumulates higher than or equal to the first predetermined height and a pressure in the outer cylinder facing the inner cylinder is higher than or equal to an atmospheric pressure; a temperature between the inner cylinder and the outer cylinder facing the inner cylinder is higher than or equal to a predetermined value; an absolute value of a temperature difference in positions separated apart from each other between the inner cylinder and the outer cylinder facing the inner cylinder is more than or equal to a predetermined value; and a predetermined time period elapses from a time when the stirring member has returned to the standby position.

With the above-described bridge elimination control apparatus for the gasification furnace of the present invention, it is possible to eliminate the bridge in the inner cylinder. Also, it is possible to flatten the solid raw material that accumulates in the inner cylinder.

In the above-described bridge elimination control apparatus for the gasification furnace, the control apparatus may cause the stirring member to wait to move down until a second predetermined time period elapses, the second predetermined time period being shorter than the predetermined time period from the time when the stirring member has returned to the standby position.

With the above-described bridge elimination control apparatus for the gasification furnace of the present invention, it is possible to prevent hunting of the stirring member, i.e., involuntary up-and-down movement.

### Effects of Invention

With the present invention, the control apparatus controls the vertical drive portion and the rotational drive portion based on the signal from the detection unit. Thus, it is possible to automatically eliminate the bridge by lowering and rotating the stirring member when the bridge in the gasification furnace is detected.

### Brief Description of Drawings

[FIG. 1] FIG. 1 is a schematic view of a gasification system to which is applied a gasification furnace according to an embodiment of the present invention.
[FIG. 2] FIG. 2 is a front cross-sectional view of the gasification furnace showing a standby position of a stirring blade member.
[FIG. 3] FIG. 3 is a front cross-sectional view of the gasification furnace showing an intermediate position of the stirring blade member.
[FIG. 4] FIG. 4 is a front cross-sectional view of the gasification furnace showing a lower end position of the stirring blade member.
[FIG. 5] FIG. 5 is a perspective view showing a lower portion of the stirring blade member.
[FIG. 6] FIG. 6 is a schematic plain view showing a cross-section of the gasification furnace.
[FIG. 7] FIG. 7 is a block diagram showing control of the gasification furnace.
[FIG. 8] FIG. 8 is a schematic view showing control of the stirring blade member in an intermediate position.
[FIG. 9] FIG. 9 is a flowchart showing the control of the stirring blade member in the intermediate position.
[FIG. 10] FIG. 10 is a schematic view showing control of the stirring blade member in a lower end position.
[FIG. 11] FIG. 11 is a flowchart showing the control of the stirring blade member in the lower end position.

### Modes for Carrying out Invention

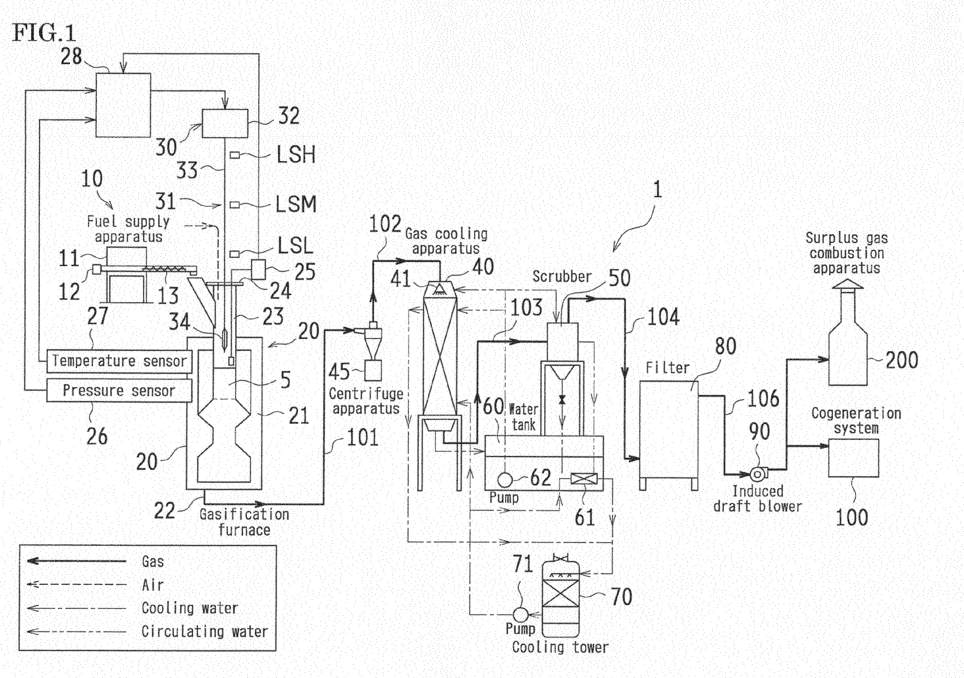

Hereinafter a description will be given on an embodiment of the present invention with reference to the drawings. FIGS. 1 to 11 show the one embodiment of the present invention.

FIG. 1 is a schematic view of a gasification system to which is applied a gasification furnace according to the embodiment of the present invention, the gasification system for gasifying biomass fuel. As shown in FIG. 1, the gasification system 1 is, for example, a woody biomass power plant using woody materials as the solid raw material for fuel. The gasification system 1 includes a fuel supply apparatus 10, a gasification furnace 20, a vertically moving stirring apparatus 30, a centrifuge apparatus 45, a gas cooling apparatus (heat exhanger) 40, a scrubber 50, a water tank 60, a cooling tower 70, a filter 80, an induced draft blower 90, an engine generator 100, a surplus gas combustion apparatus 200 and the like.

The fuel supply apparatus 10 supplies fuel to the gasification furnace 20. The fuel supply apparatus 10 includes a hopper 11, a motor 12 and a screw 13 to discharge the fuel. By controlling a frequency of the motor 12 by an inverter, a rotational speed of the screw 13 is controlled, thus a feeding amount of fuel to the gasification furnace 20 is adjusted.

The gasification furnace 20 gasifies the fuel from the fuel supply apparatus 10. In the gasification furnace 20, a gasification agent (air) is supplied to accelerate the gasification of the fuel. In FIG. 1, the dashed line arrow indicates a path through which the "air" flows.

The centrifuge apparatus 45 removes large particles of dust and the like contained in the gas from the gasification furnace 20 by centrifugation. In FIG. 1, the solid line arrow indicates a path through which the "gas" flows. A gas path 101 is connected between the gasification furnace 20 and the centrifuge apparatus 45.

The heat exchanger 40 is a gas cooling apparatus to cool the gas from the centrifuge apparatus 45. The heat exchanger 40 includes a water spray nozzle 41 that cleans the gas. A gas path 102 is connected between the centrifuge apparatus 45 and the heat exchanger 40.

The scrubber 50 cleans and cools the gas from the heat exchanger 40 by water. In the water tank 60, the water to be supplied to the scrubber 50 and the heat exchanger 40 is stored. The water tank 60 includes a heat exchanger 61. A gas path 103 is connected between the heat exchanger 40 and the scrubber 50.

The water in the water tank 60 is fed to the water spray nozzle 41 and the scrubber 50 under pressure by a pump 62. The water fed from the water tank 60 returns into the water tank 60 from the heat exchanger 40 and the scrubber 50. That is, the water in the water tank 60 contains soot, tar and the like that are contained in the gas. Hereinafter, the water in the water tank 60 is referred to as "circulating water". In FIG. 1, the dashed-two dotted line arrow indicates a path through which the "circulating water" flows.

In the cooling tower 70, the water to be supplied to the heat exchanger 40 and the heat exchanger 61 is stored. The water in the cooling tower 70 is fed to the heat exchanger 40 and the heat exchanger 61 under pressure by a pump 71.

The water fed from the cooling tower 70 returns into the cooling tower 70 from the heat exchanger 40 and the heat exchanger 61. The water in the cooling tower 70 cools the circulating water in the water tank 60 indirectly (so as not to be mixed with the circulating water in the water tank 60) by heat exchanger 61. The water in the cooling tower 70 also cools the gas indirectly (so as not to be mixed with the gas) by the heat exchanger 40. That is, the water in the cooling tower 70 does not contain the soot, tar and the like contained in the gas. Hereinafter, the water in the cooling tower 70 is referred to as "cooling water". In FIG. 1, the dashed-dotted line arrow indicates a path through which the "cooling water" flows.

The filter 80 filters small particles of dust and the like contained in the gas. A gas path 104 is connected between the scrubber 50 and the filter 80.

The induced draft blower 90 induces the gas from the gasification furnace 20 to the side of the engine generator 100 by a negative pressure operation.

The filter 80 is connected to the engine generator 100 and the surplus gas combustion apparatus 200 via a gas path 106. The induced draft blower 90 is interposed in the course of the gas path 106.

The engine generator 100 drives the generator by the gas engine. The surplus gas combustion apparatus 200 burns the surplus gas.

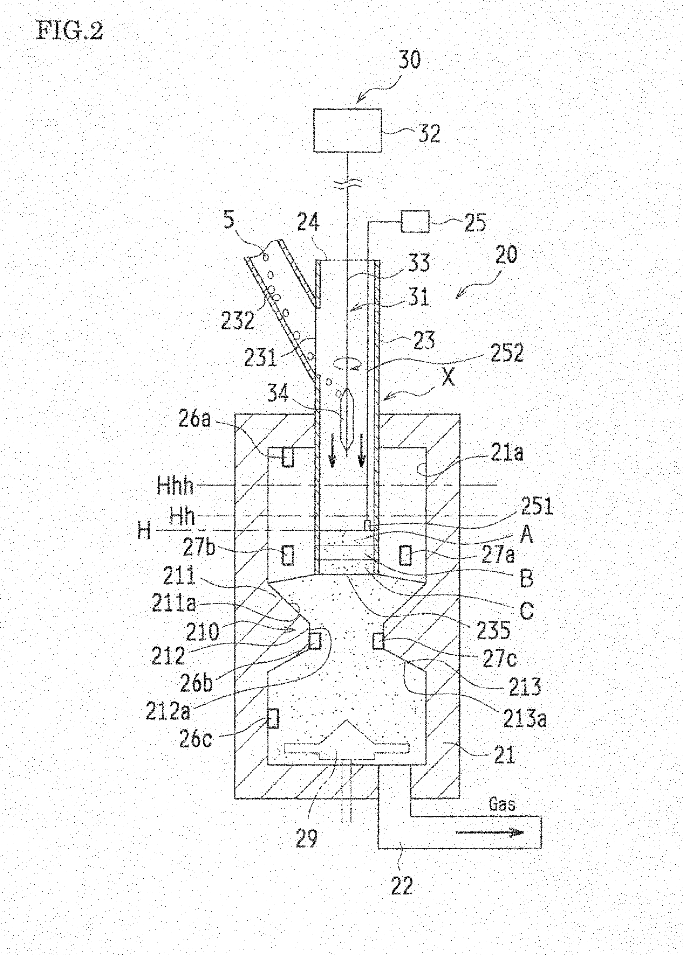

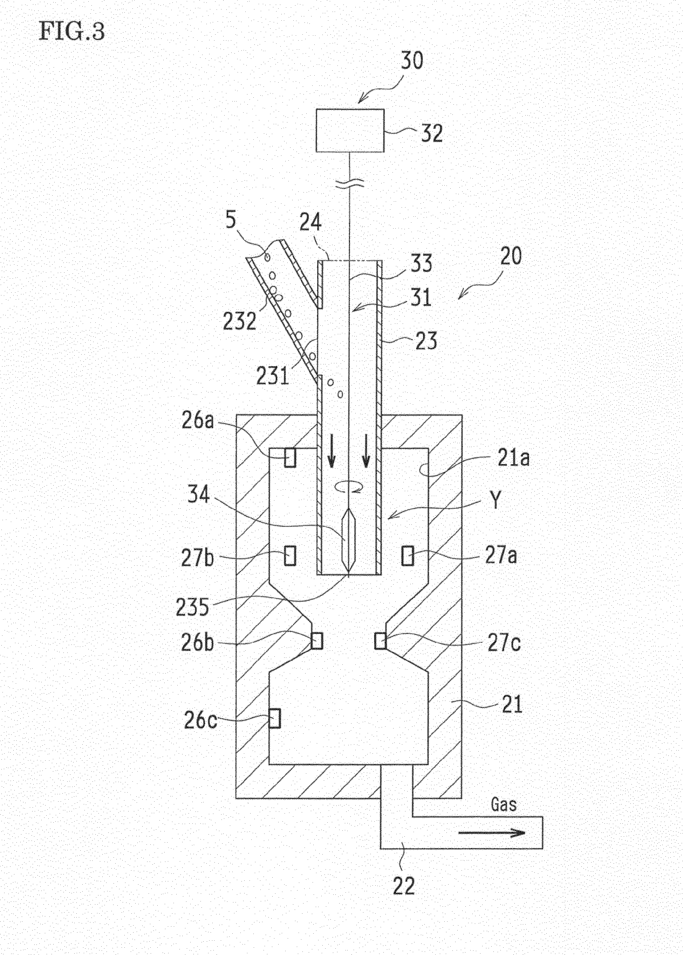

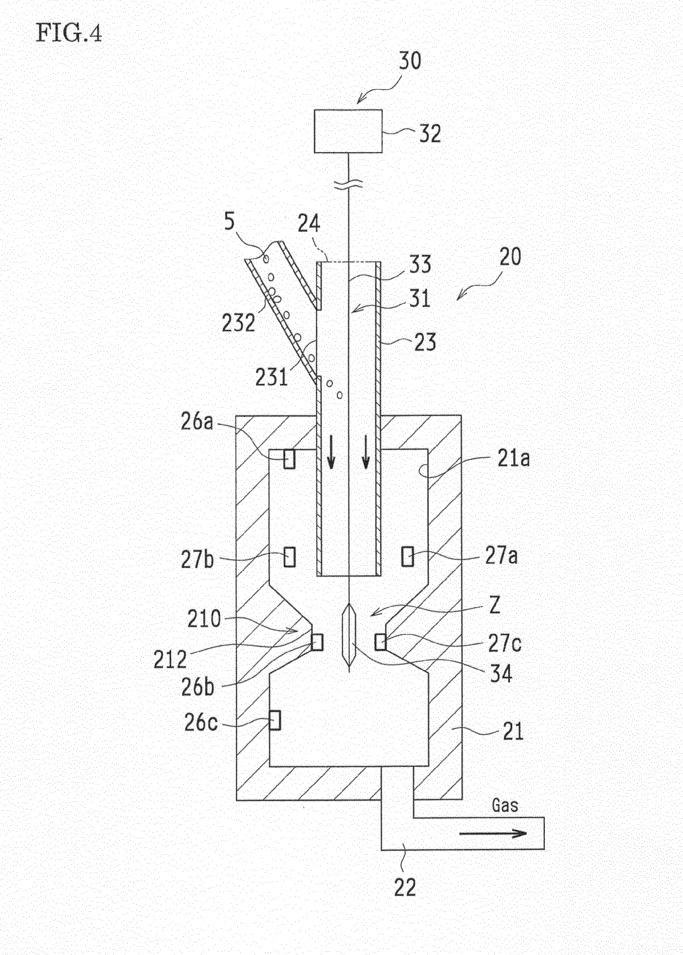

The gasification furnace 20 will be described in detail. FIG. 2 is a front cross-sectional view of the gasification furnace showing a standby position of a stirring blade member. FIG. 3 is a front cross-sectional view of the gasification furnace showing an intermediate position of the stirring blade member. FIG. 4 is a front cross-sectional view of the gasification furnace showing a lower end position of the stirring blade member.

As shown in FIG. 2, the gasification furnace 20 includes: a gasification furnace main body 21 constituted by an outer cylinder; and an inner cylinder 23. On the lower side of the gasification furnace main body 21, a gas discharge port 22 is provided. In the bottom portion inside the gasification furnace 20, a bottom stirring blade member 29 is provided to stir the fuel. Residue (ash and the like after gasification) in the gasification furnace 20 is discharged outside the gasification furnace 20 by a discharge conveyer (not shown).

The inner cylinder 23 protrudes upward from the upper end portion of the gasification furnace main body 21. The inner cylinder 23 is a cylinder shaped member into which the fuel is introduced. The inner cylinder 23 is vertically provided so that its axis center is coincident with the axis center of the gasification furnace main body 21. The upper and lower end portions of the inner cylinder 23 are opened. The upper end opening of the inner cylinder 23 may be closed by a lid 24.

The lower portion of the inner cylinder 23 is inserted into the gasification furnace main body 21 from above so as to vertically face the inside of the gasification furnace main body 21. A lower end opening 235 is located in the middle of the gasification furnace main body 21. The upper portion of the inner cylinder 23 protrudes upward from the upper end portion of the gasification furnace main body 21. The gasification agent (air) is introduced from the upper end portion (one portion) of the inner cylinder 23. In one portion of the outer periphery of the upper portion of the inner cylinder 23, a feed port 231 is opened to feed the fuel from the fuel supply apparatus 10.

An end portion of a feed tube 232 is connected to the feed port 231. The other end portion of the feed tube 232 is provided so as to extend obliquely upward. From the other end portion of the feed tube 232, fuel 5 that is come from the fuel supply apparatus 10 is fed.

The gasification furnace main body 21 has a constricted portion 210 that is located under the lower end opening 235 of the inner cylinder 23. The constricted portion 210 is formed by a ring-shaped convex portion of the gasification furnace main body 21 that extends in the central direction. The constricted portion 210 is constituted by a narrowing opening 211, a throat portion 212 and an expanding opening 213. The narrowing opening 211 has an inclined surface 211a in which an opening area of an inner peripheral surface 21a of the gasification furnace main body 21 gradually decreases downward. The throat portion 212 has an opening 212a extending downward from the lower end of the narrowing opening 211. The expanding opening 213 has an inclined surface 213a in which the opening area gradually increases from the throat portion 212.

Specifically, the opening area of the upper end of the narrowing opening 211 is set to be equal to the opening area formed by the inner peripheral surface 21a of the gasification furnace main body 21. The opening area of the lower end of the narrowing opening 211 is set to be equal to the opening area of the throat portion 212, and furthermore, is set to be equal to the opening area of the inner cylinder 23. The upper opening area of the expanding opening 213 is set to be equal to the opening area of the throat portion 212. In addition, the lower opening area of the expanding opening 213 is set to be equal to the opening area formed by the inner peripheral surface 21a of the gasification furnace main body 21.

Above the gasification furnace 20, the vertically moving stirring apparatus 30 is provided. The vertically moving stirring apparatus 30 includes: a stirring blade member 31 that is inserted into the inner cylinder 23 from above and that serves as a stirring member having its longitudinal direction in the vertical direction of the gasification furnace 20; and a drive portion 32 that raises and lowers the stirring blade member 31 in a stepwise manner to an appropriate height.

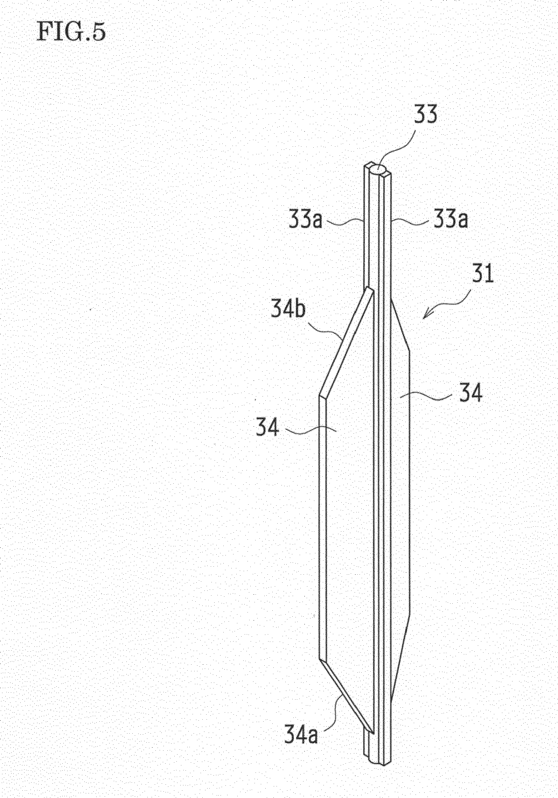

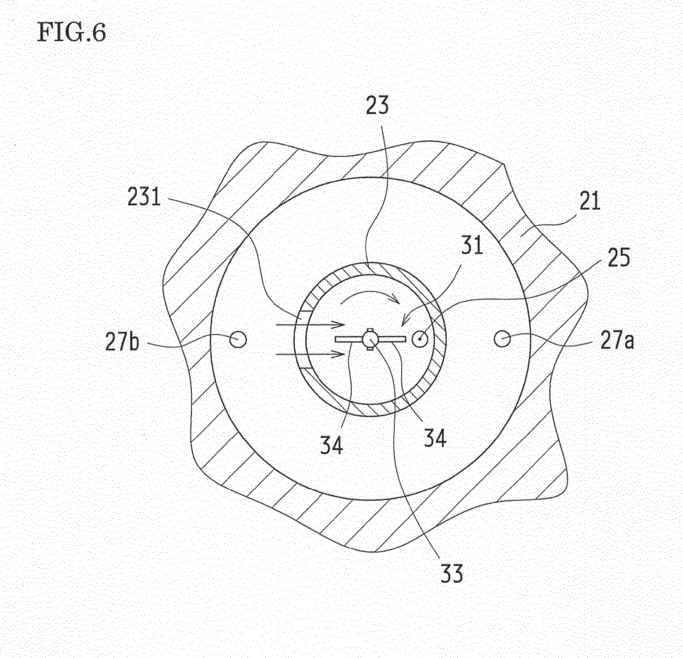

FIG. 5 is a perspective view showing a lower portion of the stirring blade member. FIG. 6 is a schematic plain view showing a cross-section of the gasification furnace. The stirring blade member 31 is constituted by a vertical shaft (stirring member shaft) 33 hanging down with its upper portion being connected to the drive portion 32, and a pair of blades 34 disposed on the lower portion of the vertical shaft 33. The blade 34 is made of a flat plate and protrudes in the diametral direction of the vertical shaft 33. The blade 34 is made of a plate member whose upper and lower sides along the vertical shaft 33 are tapered to respective points.

That is, a lower edge 34a of the blade 34 is gradually inclined upward toward the radially outward direction of the vertical shaft 33. Thus, since the lower edge 34a of the blade 34 is inclined upward, the blade 34 can be easily inserted into the fuel when the blade 34 moves down.

Also, an upper edge 34b of the blade 34 is gradually inclined downward toward the radially outward direction of the vertical shaft 33. Thus, since the upper edge of the blade 34 is inclined downward, the blade 34 in the fuel can be easily pulled out when the blade 34 moves up.

Along the vertical shaft 33, a pair of linear reinforcing members 33a is provided. The flexural rigidity of the vertical shaft 33 is improved by the reinforcing members 33a.

The drive portion 32 includes: a vertical drive portion 35 that raises and lowers the stirring blade member 31; and a rotational drive portion 36 that rotates the stirring blade member 31 about the vertical shaft 33. The vertical drive portion 35 raises and lowers the stirring blade member 31 by a cylinder mechanism, a motor mechanism and the like. The rotational drive portion 36 rotates the stirring blade member 31 by a predetermined angle by a motor mechanism and the like when the stirring blade member 31 moves down.

The vertical moving operation of the stirring blade member 31 is stopped at a plurality of predetermined positions. Specifically, the position of the stirring blade member 31 can be changed at three stages, i.e., a standby position X as the highest position (see FIG. 2), an intermediate position Y as a first position (see FIG. 3), and a lower end position Z as a second position (see FIG. 4).

The standby position X is higher than the fuel 5 that accumulates in the inner cylinder 23 by a predetermined height so as to be separated apart from the fuel 5. The intermediate position Y is a position to eliminate the bridge of the fuel 5 in the inner cylinder, which means a position at which the lowest part of the stirring blade member 31 (i.e., the tip of the vertical shaft 33) substantially reaches the lower end opening 235 of the inner cylinder 23, or a position at which the lowest part of the stirring blade member 31 slightly protrudes from the lower end opening 235 of the inner cylinder 23. The lower end position Z is a position to eliminate the bridge of the fuel 5 in the gasification furnace main body 21, which means a position at which the blades 34 of the stirring blade member 31 pass through the constricted portion 210.

Also, at the standby position X, the blades 34 of the stirring blade member 31 are stopped at a rotation angle position parallel to the feeding direction of the fuel 5 (direction indicated by the arrow in FIG. 6). Thus, by setting the rotation angle position of the blades 34, it is possible to prevent the fed fuel 5 from coming into contact with and rebounding from the blades 34, accordingly to prevent the fuel 5 from accumulating unevenly in the inner cylinder 23.

The stirring blade member 31 is positioned by a plurality of (in this embodiment, three) limit switches LSH, LSM and LSL serving as detection units that are fixed on the side of the drive portion 32. Specifically, the limit switch LSH on the upper stage is to stop the stirring blade member 31 at the standby position X. The limit switch LSM on the intermediate stage is to stop the stirring blade member 31 at the intermediate position Y. The limit switch LSL on the lower stage is to stop the stirring blade member 31 at the lower end position Z.

The limit switches LSL, LSM and LSH are provided at positions higher than the inner cylinder 23. Since the limit switches LSL, LSM and LSH are provided at the positions higher than the inner cylinder 23, affection of heat caused by combustion of the fuel can be reduced to the extent possible. Thus, reliability of the limit switches can be maintained for a long period of time.

As shown in FIG. 2, above the inner cylinder 23, a level sensor 25 is provided for detecting a height position of the fuel 5 (accumulation height of the fuel) that has accumulated in the inner cylinder 23. The level sensor 25 includes a chain 252 and a measurement portion (not shown). The chain 252 hangs down in the inner axis direction (vertical direction) of the inner cylinder 23 and has a weight 251 at the lower end thereof. The measurement portion has a drive portion to wind up and down the chain 252 so as to have the weight 251 move up and down. When an upper surface position of the fuel 5 that accumulates in the inner cylinder 23 is measured using the level sensor 25, the weight 251 moves down due to extension of the chain 252. When the weight 251 comes into contact with the fuel 5, the measurement portion detects a change in the weight of the weight 251 (change in the weight balance of the weight), thus, the height of the fuel 5 can be obtained. Such a level detection of the fuel 5 is carried out on a regular and continuous basis (for example, at one-minute intervals).

As shown in FIG. 2, in the gasification furnace main body 21, a plurality of pressure sensors 26a, 26b and 26c is provided. The pressure sensors 26a, 26b and 26c detect a pressure in the gasification furnace main body 21 (hereinafter referred to as "inner pressure").

The pressure sensor 26a is mounted on the upper portion in the gasification furnace main body 21, preferably on the upper end portion. That is, the pressure sensor 26a is located separated apart from the fuel 5 that accumulates in the gasification furnace 20. The pressure sensor 26a is used for detection of a state in which a fuel level in the furnace inside the inner cylinder is not appropriately controlled.

The pressure sensor 26b is mounted on the throat portion 212. The pressure sensor 26c is provided under the throat portion 212 (in the bottom portion or its vicinity of the gasification furnace main body 21). The pressure sensors 26b and 26c are used for detection of the bridge in the throat portion 212.

As shown in FIG. 2, in the gasification furnace main body 21, a plurality of temperature sensors 27a, 27b and 27c is provided. The temperature sensors 27a, 27b and 27c detect the temperature in the gasification furnace main body 21. The pair of the temperature sensors 27a and 27b is provided on the inner peripheral surface 21a of the gasification furnace main body 21 and furthermore above the constricted portion 210. That is, the temperature sensors 27a and 27b are located separated apart from the fuel 5 that accumulates in the gasification furnace main body 21.

Also, as shown in FIG. 6, the temperature sensors 27a and 27b are provided separated apart from each other in the diametral direction relative to the center of the gasification furnace main body 21. In this way, since the temperature sensors 27a and 27b are separated apart from each other, it is possible to detect the temperatures between the inner cylinder 23 and the gasification furnace main body 21 facing the inner cylinder 23 (respective temperatures of two parts in the gasification furnace main body 21). The temperature sensors 27a and 27b are used for detection of the state in which the fuel level in the furnace inside the inner cylinder is not appropriately controlled.

The temperature sensor 27c is mounted on the throat portion 212. The temperature sensor 27c is used for detection of the bridge in the throat portion 212.

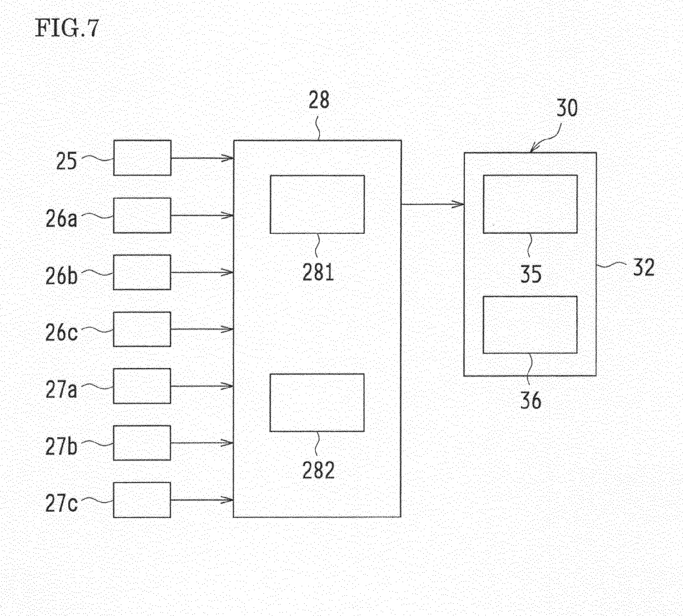

As shown in FIGS. 1 and 7, the level sensor 25, the pressure sensors 26a, 26b and 26c, and the temperature sensors 27a, 27b and 27c are connected to a control apparatus 28. The control apparatus 28 is to control the vertically moving stirring apparatus 30 based on the respective detected signals of the level sensor 25, the pressure sensors 26a, 26b and 26c, and the temperature sensors 27a, 27b and 27c. For example, when an air drift occurs in the inner cylinder 23, or a bridge occurs to produce a space (separated state) between the combusting part and the fuel in the inner cylinder 23, the vertically moving stirring apparatus 30 performs a stirring operation at the intermediate position Y. When the bridge occurs in the constricted portion 210, it performs a breakage operation at the lower end position Z.

The level sensor 25, the pressure sensors 26a, 26b and 26c, and the temperature sensors 27a, 27b and 27c correspond to detection units that monitor an atmosphere in the furnace.

The vertically moving stirring apparatus 30 is connected to the control apparatus 28. The control apparatus 28 includes a processing portion 281 and a memory 282.

The processing portion 281 is constituted by a CPU (central processing unit) and the like. The memory 282 is constituted by a ROM (read only memory), a RAM (random access memory) and the like.

Gasification of the fuel 5 by a normal operation using the above-configured gasification system 1 will now be described.

The fuel 5 is fed into the hopper 11 of the fuel supply apparatus 10. In the fuel supply apparatus 10, the motor 12 rotates the screw 13 at a predetermined rotational speed. The fuel 5 is supplied to the inner cylinder 23 of the gasification furnace 20 via the screw 13. The fuel 5 fed into the inner cylinder 23 is supplied to the gasification furnace main body 21, and accumulates up to a predetermined height (a target value of the fuel level in the furnace) upward from the lower end opening 235 of the inner cylinder 23. Then, the fuel 5 begins to burn to become gas.

As shown in FIG. 2, the fuel 5 that accumulates in the inner cylinder 23 includes a dry layer/dry distillation layer A, an oxidation layer B and a reduction layer C, from the upper portion in this order. Since the stirring blade member 31 of the vertically moving stirring apparatus 30 is located at the standby position X, the stirring blade member 31 is not an obstacle to feed the fuel 5.

The gas generated in the gasification furnace 20 is drawn from the gas discharge port 22 and is supplied to the centrifuge apparatus 45 via the gas path 101. The centrifuge apparatus 45 removes large particles of dust and the like contained in the gas from the gasification furnace 20 by centrifugation.

After the centrifuge apparatus 45 removed the large particles of dust and the like contained in the gas, such a gas is supplied to the heat exchanger 40 via the gas path 102 so as to be cooled. The gas cooled by the heat exchanger 40 is further supplied to the scrubber 50 via the gas path 103 so as to be cleaned and cooled by the water.

The gas cleaned and cooled by the scrubber 50 is supplied to the filter 80 via the gas path 104.

The filter 80 filters small particles of dust and the like contained in the gas. The induced draft blower 90 induces the gas from the gasification furnace 20 to the side of the engine generator 100 by a negative pressure operation. The gas that has passed through the induced draft blower 90 is supplied to the engine generator 100. The engine generator 100 drives the generator by the gas engine. Surplus gas is supplied to the surplus gas combustion apparatus 200. The surplus gas combustion apparatus 200 burns the surplus gas.

A description will be given on control to eliminate the bridge of the fuel.

Tar is produced when a fuel level in the furnace inside the inner cylinder is not within an appropriate range or when the bridge generated in the throat portion 212 is broken. The control to eliminate the bridge of the fuel is to detect inappropriateness of the fuel level in the inner cylinder in the furnace or the bridge in the throat portion 212 and to eliminate quickly the bridge, accordingly to prevent the tar from affecting the apparatuses.

In this embodiment, control in the intermediate position that stirs the fuel in the inner cylinder 23, and control in the lower end position that breaks the bridge in the lower end position are performed. If a condition for performing the control in the intermediate position and that for performing the control in the lower end position are both established, the control in the lower end position is performed on a priority basis.

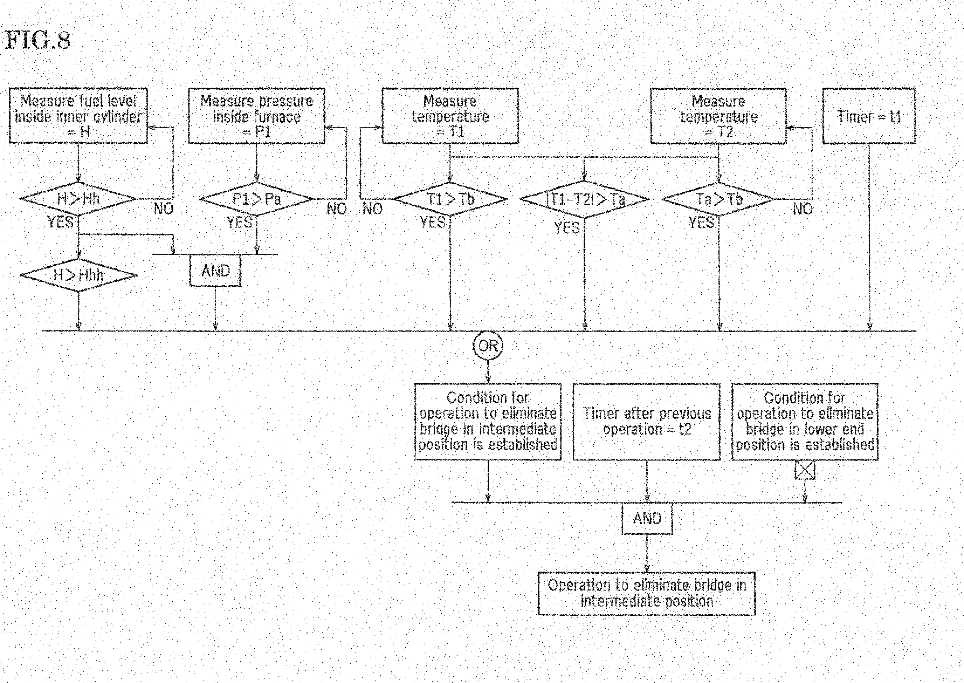

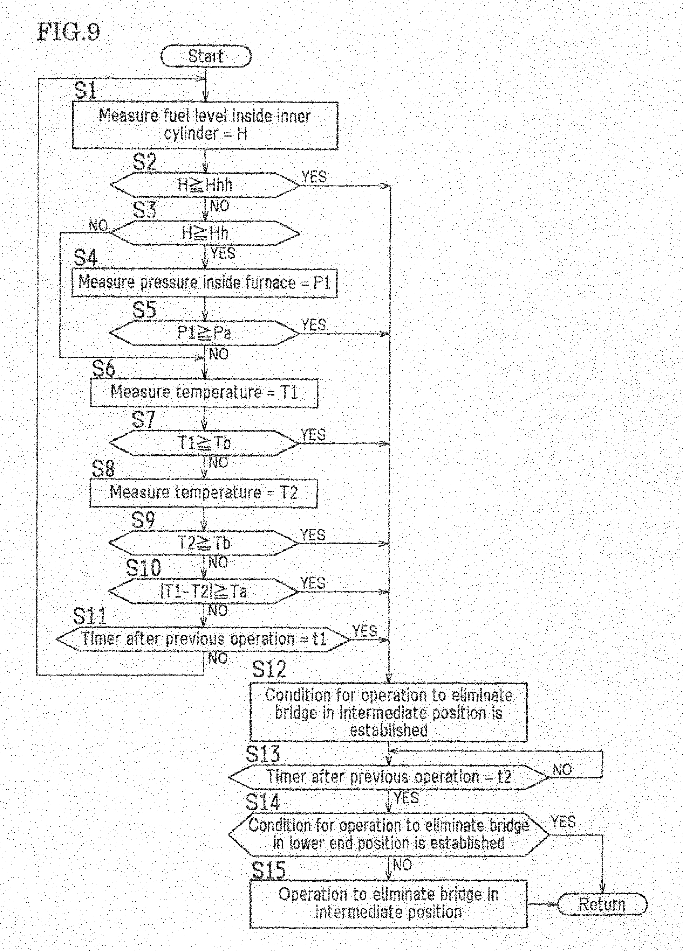

First, a description on the control of the stirring blade member in the intermediate position will be described with reference to FIGS. 8 and 9. FIG. 8 is a schematic view showing the control of the stirring blade member in the intermediate position. FIG. 9 is a flowchart showing the control of the stirring blade member in the intermediate position.

A level of the fuel 5 inside the inner cylinder 23 is measured by the level sensor 25 that serves as a detection unit to monitor an atmosphere inside the gasification furnace 20, so that a level H of the fuel 5 in the furnace is detected (S1). Then, it is confirmed that whether the level H in the furnace exceeds a critical level limit Hhh in the furnace (S2). If the level H in the furnace does not exceed the critical level limit Hhh in the furnace, the level H in the furnace is compared to a predetermined upper level limit Hh in the furnace (S3). Here, the critical level limit Hhh in the furnace means a height from the lower end opening 235 of the inner cylinder 23, the height where the combustion is impossible. Therefore, if the fuel reaches the critical level limit Hhh in the furnace, it is determined that a condition for operation to eliminate the bridge in the intermediate position is established (S12). The upper level limit Hh in the furnace corresponds to a first height, and the critical level limit Hhh in the furnace corresponds to a second height.

If the pressure sensor 26a is used as the detection unit to monitor the atmosphere inside the gasification furnace 20, a pressure inside the furnace (inner pressure) P1 is measured by the pressure sensor 26a (S4), and the inner pressure P1 is compared to a predetermined reference pressure (predetermined pressure value) Pa (S5). Here, the reference pressure Pa means, for example, an atmospheric pressure. During normal operation, the inner pressure in the gasification furnace 20 is less than or equal to the atmospheric pressure. When the inner pressure P1 is more than or equal to the reference pressure Pa, it is considered that an air drift occurs in the gasification furnace main body 21 (inside the inner cylinder 23). Such an air drift forms, in the fuel 5 that accumulates in the inner cylinder 23, portions where it is difficult/easy for the air to flow. Where it is difficult for the air to flow, the temperature decreases and the tar is produced easily. Where it is too easy for the air to flow, the air is likely to be supplied in the inner space of a double structure (space formed by the inner peripheral surface of the gasification furnace main body 21 and the outer peripheral surface of the inner cylinder 23), which may cause combustion of the generated gas. Therefore, it is determined that the condition for operation to eliminate the bridge in the intermediate position is established (S12).

A space temperature T1 on an outer peripheral portion of the inner cylinder 23 is measured using the temperature sensor 27a (S6), and the space temperature T1 in the furnace is compared to a predetermined reference temperature (predetermined temperature value) Tb (S7). Here, the reference temperature Tb means a temperature at which the fuel in the gasification furnace 20 is normally gasified. If the space temperature T1 in the furnace is more than or equal to the reference temperature Tb, it is considered that combustion at an abnormally high temperature occurs due to the air drift. Thus, it is determined that the condition for operation to eliminate the bridge in the intermediate position is established (S12).

Also, a space temperature T2 on an outer peripheral portion of the inner cylinder 23 is measured using the temperature sensor 27b (S8), and the space temperature T2 in the furnace is compared to the reference temperature Tb (S9). If the space temperature T2 in the furnace is more than or equal to the reference temperature Tb, it is also determined that the condition for operation to eliminate the bridge in the intermediate position is established (S12). The measurement by the temperature sensors 27a and 27b is performed for a predetermined period of time (for example, for five seconds).

The absolute value |T1-T2| of the difference between the temperatures T1 and T2 is calculated. If the absolute value of the difference is more than or equal to a threshold value (predetermined value) Ta (S10), it is considered that the combustion at an abnormally high temperature occurs due to the air drift. Thus, it is determined that the condition for operation to eliminate the bridge in the intermediate position is established (S12).

Furthermore, when the above-described conditions are not satisfied, if a timer determines that a predetermined time period (for example, fifteen minutes) has elapsed after the previous operation (S11), it is determined that the operation to eliminate the bridge in the intermediate position is established (S12).

The operation to eliminate the bridge in the intermediate position is performed (S15) when any one of the above-described conditions for operation to eliminate the bridge in the intermediate position (S2, S5, S7, S9, S10 and S11) is established as described above, and furthermore under the condition in which it is confirmed, by the timer, that a predetermined time period (for example, one minute) has elapsed after the previous operation (S13), and in which the condition for operation to eliminate the bridge in the lower end position is not established (S14). Here, it is confirmed that the predetermined time period has elapsed after the previous operation by the timer in order to prevent the stirring blade member 31 of the vertically moving stirring apparatus 30 from involuntarily moving up and down. The predetermined time period (for example, one minute) after the previous operation corresponds to a second predetermined time period.

When the operation to eliminate the bridge in the intermediate position is performed, the drive portion 32 of the vertically moving stirring apparatus 30 is operated. The vertical drive portion 35 lowers the stirring blade member 31 being at the standby position to the intermediate position (see FIG. 3). Meanwhile, the rotational drive portion 36 rotates the stirring blade member 31 that is moving down. As a result, the blades 34 enter the fuel while rotating, thus the fuel can be substantially flattened. Furthermore, if the bridge occurs to produce a space (separated state) between the combusting part and the fuel in the inner cylinder 23, it is possible to eliminate quickly the bridge.

Also, the stirring blade member 31 reached the intermediate position Y moves up in the state being fixed at a predetermined rotational position. Thus, the blades 34 can be smoothly pulled out from the fuel, which hardly affect the flattened fuel.

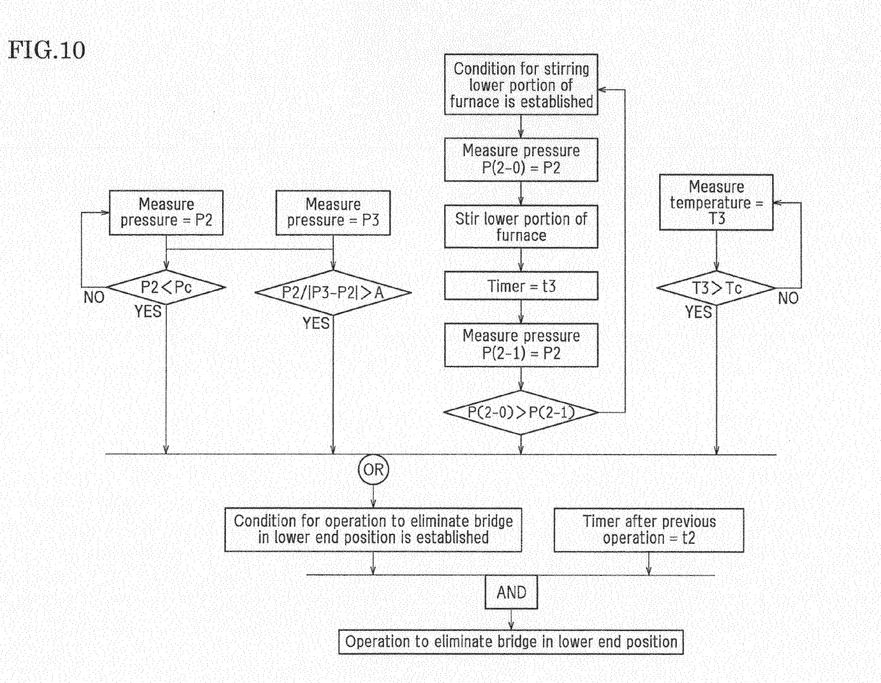

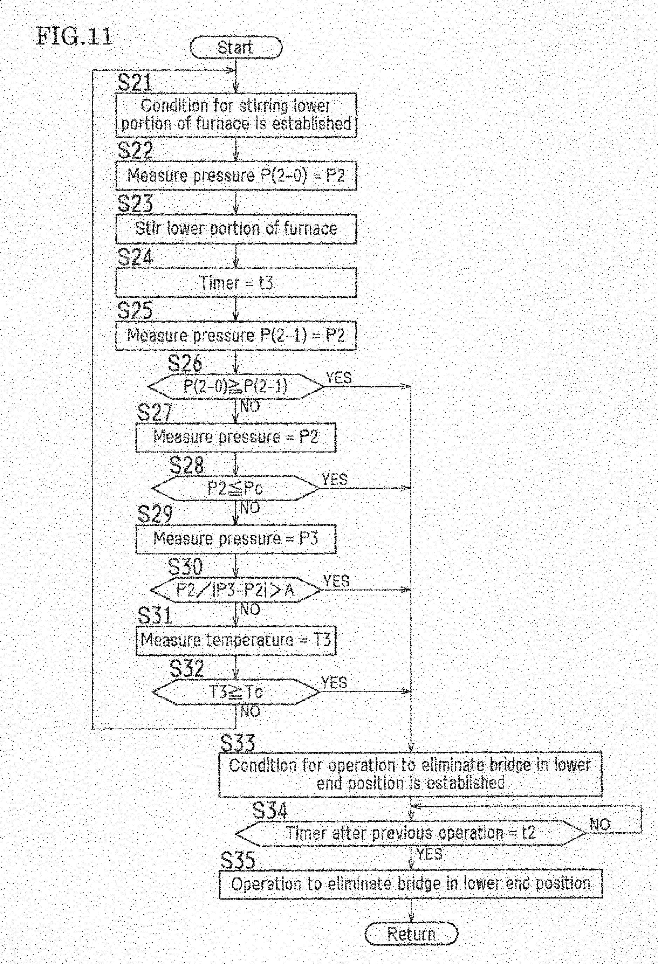

Next, a description on the control to eliminate the bridge in the lower end position will be described with reference to FIGS. 10 and 11.

FIG. 10 is a schematic view showing the control of the stirring blade member in the lower end position. FIG. 11 is a flowchart showing the control of the stirring blade member in the lower end position. The bridge is likely to occur in the constricted portion 210 because the opening area of the constricted portion 210 is small.

When a condition for stirring the lower portion is established (S21), the inner pressure is measured by the pressure sensor 26b (S22), then the bottom stirring blade member 29 stirs the lower portion in the furnace (S23). After the stirring operation is performed for a predetermined period of time (S24), the inner pressure is measured once again by the pressure sensor 26b (S25). Thus, it is determined whether the previously measured inner pressure P (2-0) is more than or equal to the subsequently measured inner pressure P (2-1) (S26). When the previously measured inner pressure P (2-0) is more than or equal to the subsequently measured inner pressure P (2-1), it is determined that the stirring does not recover P2. Thus, it is determined that the condition for operation to eliminate the bridge in the lower end position is established (S33).

When the pressure P2 measured by the pressure sensor 26b is less than a predetermined pressure PC (S27 and S28), the fuel is compressed and a pressure loss increases. Therefore, it is determined that the bridge occurs in the throat portion 212, thus it is determined that the condition for operation to eliminate the bridge in the lower end position is established (S33).

An inner pressure P3 of the pressure sensor 26c is measured (S29), and if a value indicating the correlation between P2 and P3 is more than or equal to a predetermined value A, it is determined that the bridge occurs (S30). Thus, it is determined that the condition for operation to eliminate the bridge in the lower end position is established (S33). The correlation between P2 and P3 is represented, for example, by P2 / (P3-P2) > A.

A temperature T3 measured by the temperature sensor 27c is compared to a predetermined temperature TC, and if the temperature T3 is more than or equal to the predetermined temperature TC (S31 and S32), it is considered that a cavity is produced under the throat portion 212 and char does not exist or exists a little. Therefore, it is determined that the bridge occurs in the throat portion 212, thus it is determined that the condition for operation to eliminate the bridge in the lower end position is established (S33).

The operation to eliminate the bridge in the lower end position is performed (S35) when any one of the above-described conditions for operation to eliminate the bridge in the lower end position (S26, S28 S30 and S32) is established, and furthermore under the condition in which the previous operation time t2 (for example, one minute) has elapsed (S34). The previous operation time t2 (for example, one minute) corresponds to a time period from the time when the stirring member has returned to the standby position to the time when a predetermined time has elapsed.

When the operation to eliminate the bridge in the lower end position is performed, the drive portion 32 of the vertically moving stirring apparatus 30 is operated. The vertical drive portion 35 lowers the stirring blade member 31 being at the standby position to the lower end position Z (see FIG. 4). Meanwhile, the rotational drive portion 36 rotates the stirring blade member 31 that is moving down about the vertical shaft 33. As a result, the blades 34 enter the fuel while rotating, thus the bridge can be broken. The stirring blade member 31 can reliably break the bridge by its rotation, however, it is also possible to break the bridge by lowering the stirring blade member 31 without rotation.

Also, the stirring blade member 31 reached the lower end position Z moves up in the state being fixed at the predetermined rotational position.

As described above, in the gasification furnace 20 of this embodiment, the stirring blade member 31 enters the fuel while rotating about the vertical shaft 33. Thus, it is possible to prevent a rat hole from being formed in the fuel. That is, a simple pushing function without rotation of the stirring blade member 31 forms the rat hole in the fuel, which affects the gasification of the fuel. Then, by adding the stirring operation to the above function, it is possible to break the hole and to uniform an accumulation level of the fuel.

When the stirring blade member 31 is not operated, it is at the standby position X (i.e., the position where the stirring blade member 31 does not come into contact with the fuel), accordingly it is not in a high temperature atmosphere. Thus, durability of the stirring blade member 31 is improved.

In addition, on the vertical shaft 33 of the stirring blade member 31, the pair of linear reinforcing members 33a is provided along the vertical shaft 33. Thus, the rigidity of the stirring blade member at the time of entering the fuel is improved, that is, it is rigid against bending.

Furthermore, it is possible to improve gasification performance by the vertically moving stirring apparatus 30. Specifically, fluctuation in the feeding amount is reduced and a contact rate between the fuel and the gas is improved, thus gas heat generation can be improved as well as a fluctuation rate can be reduced.

By performing the operation to eliminate the bridge using the vertically moving stirring apparatus 30 periodically and as desired, it is possible to prevent a large amount of tar from being produced due to the breakup of the big bridge.

Furthermore, gasification power generation using an inexpensive material can be performed, thus it is possible to reduce running costs.

The present invention is not limited to the above-described embodiment. For example, in the above-described embodiment, the description was exemplarily given on the case where the constricted portion 210 is provided on the inner surface of the gasification furnace main body 21. However, the constricted portion 210 is not necessarily required. There is a case in which the bridge occurs in the gasification furnace without the constricted portion 210. In such a case also, it is possible to eliminate the bridge by lowering the stirring blade member 31 to the predetermined position.

Also, regarding the predetermined position to which the stirring blade member 31 moves down, the stirring blade member 31 may be stopped at three or more positions instead of the two positions, i.e., the intermediate position Y and the lower end position Z. For example, the inner cylinder 23 and the gasification furnace main body 21 can include, respectively, a plurality of predetermined positions to which the stirring blade member 31 moves down.

Also, for the cross-section opening of the gasification furnace main body 21 and the inner cylinder 23, any shape can be adopted, such as a circular shape and a rectangular shape.

The present invention may be embodied in other forms without departing from the gist or essential characteristics thereof. The foregoing embodiment is therefore to be considered in all respects as illustrative and not limiting. The scope of the invention is indicated by the appended claims rather than by the foregoing description, and all modifications and changes that come within the meaning and range of equivalency of the claims are intended to be embraced therein.

This application claims priority on Patent Application No. 2012-160651 filed in Japan on July 19, 2012, which is hereby incorporated by reference in its entirety.

### Industrial Applicability

The present invention can be applied to intended purposes for which it is necessary to eliminate a bridge of fuel that occurs in a gasification furnace. For example, the present invention is suitable for a gasification furnace using, as the fuel, a solid raw material such as crushed chips that easily make a bridge.

### Description of Reference Numerals

- 1: Gasification system
- 5: Fuel (solid raw material)
- 10: Fuel supply apparatus
- 20: Gasification furnace
- 21: Gasification furnace main body
- 23: Inner cylinder
- 25: Level sensor (detection unit)
- 26a: Pressure sensor (detection unit)
- 26b: Pressure sensor (detection unit)
- 26c: Pressure sensor (detection unit)
- 27a: Temperature sensor (detection unit)
- 27b: Temperature sensor (detection unit)
- 27c: Temperature sensor (detection unit)
- 28: Control apparatus
- 29: Bottom stirring blade member
- 30: Vertically moving stirring apparatus
- 31: Stirring blade member (stirring member)
- 32: Drive portion
- 33: Vertical shaft (stirring member shaft)
- 34: Blade
- 35: Vertical drive portion
- 36: Rotational drive portion
- 210: Constricted portion
- 211: Narrowing opening
- 211a: Inclined surface
- 212: Throat portion
- 213: Expanding opening
- 235: Lower end opening
- X: Standby position
- Y: Intermediate position
- Z: Lower end position
- LSL: Limit switch
- LSM: Limit switch
- LSH: Limit switch

## Claims

1. A bridge elimination control apparatus for a gasification furnace, the gasification furnace having, on an upper portion of an outer cylinder, an inner cylinder for supplying a solid raw material, the bridge elimination control apparatus for the gasification furnace comprising:
a stirring member being inserted into the inner cylinder, the stirring member having a longitudinal direction in a vertical direction of the gasification furnace;
a vertical drive portion configured to raise and lower the stirring member between a standby position where the stirring member is separated apart from the solid raw material that accumulates in the inner cylinder, and a predetermined position located in the solid raw material in the gasification furnace under the standby position;
a rotational drive portion that rotates the stirring member about a shaft of the stirring member when an operation to eliminate a bridge is performed by lowering the stirring member;
a detection unit configured to detect the bridge caused by the solid raw material in the gasification furnace; and
a control apparatus configured to control the vertical drive portion and the rotational drive portion based on a signal from the detection unit.

2. The bridge elimination control apparatus for the gasification furnace according to claim 1,
wherein a second stirring member is disposed on a bottom portion of the outer cylinder, and a throat portion of the outer cylinder is disposed above the bottom portion and under the inner cylinder, and
wherein the control apparatus lowers the stirring member to a position at which the stirring member passes through the throat portion when the control apparatus determines that at least one of conditions is established, the conditions in which: a pressure in the throat portion does not increase in spite of an operation of the second stirring member; the pressure of the throat portion is less than or equal to a predetermined value; a pressure on a side under the throat portion and the pressure in the throat portion have a predetermined correlation; and a temperature in the throat portion is higher than or equal to a predetermined value.

3. The bridge elimination control apparatus for the gasification furnace according to claim 2,
wherein the control apparatus causes the stirring member to wait to move down until a predetermined time period elapses from a time when the stirring member has returned to the standby position.

4. The bridge elimination control apparatus for the gasification furnace according to claim 1,
wherein a first predetermined position separated from a lower end of the inner cylinder is set to be a first predetermined height, and a predetermined position higher than the first predetermined height is set to be a second predetermined height, and
wherein the control apparatus lowers the stirring member to a position at which a lower end of the stirring member reaches the lower end of the inner cylinder when the control apparatus determines that at least one of conditions is established, the conditions in which: the solid raw material accumulates higher than or equal to the second predetermined height; the solid raw material accumulates higher than or equal to the first predetermined height and a pressure in the outer cylinder facing the inner cylinder is higher than or equal to an atmospheric pressure; a temperature between the inner cylinder and the outer cylinder facing the inner cylinder is higher than or equal to a predetermined value; an absolute value of a temperature difference in positions separated apart from each other between the inner cylinder and the outer cylinder facing the inner cylinder is more than or equal to a predetermined value; and a predetermined time period elapses from a time when the stirring member has returned to the standby position.

5. The bridge elimination control apparatus for the gasification furnace according to claim 4,
wherein the control apparatus causes the stirring member to wait to move down until a second predetermined time period elapses, the second predetermined time period being shorter than the predetermined time period from the time when the stirring member has returned to the standby position.
